# EUROPÄISCHE PATENTSCHRIFT

(11) **EP 3 409 103 B1**
(45) Veröffentlichungstag und Bekanntmachung des Hinweises auf die Patenterteilung: **22.09.2021**
(21) Anmeldenummer: 17173370.2
(22) Anmeldetag: 30.05.2017
(51) Int. Cl.: A01G 31/04

(54) **VORRICHTUNG UND VERFAHREN ZUR FÖRDERUNG DES WACHSTUMS VON PFLANZEN**
DEVICE AND METHOD FOR ENCOURAGING THE GROWTH OF PLANTS
DISPOSITIF ET PROCÉDÉ DE STIMULATION DE LA CROISSANCE DE PLANTES

(43) Veröffentlichungstag der Anmeldung: 05.12.2018
(73) Patentinhaber: Fraunhofer-Gesellschaft zur Förderung der angewandten Forschung e.V., 80686 München (DE)
(72) Erfinder: Vogel, Simon, 52074 Aachen (DE); Schillberg, Stefan, 52074 Aachen (DE)
(74) Vertreter: Roth, Andy Stefan

(56) Entgegenhaltungen:
- EP-A2- 2 489 256
- WO-A1-2010/008335
- DE-A1- 1 782 764
- DE-A1- 2 852 936
- DE-B- 1 286 800
- FR-A1- 3 021 841
- JP-A- S6 420 037
- JP-U- S5 862 848
- US-A1- 2009 165 373

## Beschreibung

Die Erfindung betrifft eine Vorrichtung zur automatisierten Pflanzenaufzucht, die über ein entlang einer Förderstrecke bewegbares Förderband zum wenigstens abschnittsweisen Transport von Pflanzen verfügt. Während des Transports der Pflanzen entlang der Förderstrecke, die in wenigstens einem ersten Abschnitt zumindest annähernd horizontal und in wenigstens einem zweiten Abschnitt zumindest annähernd vertikal verläuft, werden die Pflanzen zumindest zeitweise von einer Nährstoffversorgungseinheit mit Wasser und Nährmedium versorgt.

Seit vielen Jahren sind die hydroponische und die aeroponische Pflanzenzucht bekannt, wobei diese insbesondere in den letzten Jahrzehnten zu intensiv genutzten Kultivierungssystemen, vor allem für Gewächshauskulturen, etwa für Tomaten, Gurken und Salate, geworden sind. Die Massenproduktion von landwirtschaftlichen Produkten in vollklimatisierten Gebäuden unter strenger Kontrolle der externen Einflüsse wird auch als sogenanntes "indoor-farming" bezeichnet.

In diesem Zusammenhang sind Systeme zur Aufzucht von Pflanzen bekannt, bei denen die Pflanzen in einem Regalsystem angeordnet und während der Wachstumsphase automatisiert mit einem Nährmedium versorgt werden. Ein derartiges System wird beispielsweise in der JP 2014-168420 A beschrieben, wobei hier die für die Aufzucht vorgesehenen Pflanzen in einer horizontalen Ebene jeweils in einem Trägermedium fixiert angeordnet sind und durch regelmäßiges Fluten und Ablassen von Nährmedium mit Wasser und Nährstoffen versorgt werden. Zusätzlich erfolgt eine künstliche Beleuchtung mit Hilfe von direkt über den Pflanzen angebrachten Leuchtstoffröhren oder LEDs.

Ferner ist aus der AT 250728 ein spezielles Gewächshaus bekannt, das in Form eines Turmgewächshauses ausgeführt ist. Wesentlich hierbei ist, dass die Höhe eines Gebäudes ausgenutzt wird, um eine Förderstrecke für die Pflanzenzucht zu realisieren. Das beschriebene Gewächshaus verfügt über eine Mehrzahl von schlangenförmig angeordneten Förderbändern zum Transport der Pflanzen, wobei das Förderband als Umlaufbahn ausgeführt ist und obere sowie untere Umlenkrollen aufweist, sodass die Pflanzen in unterschiedlicher Richtung vertikal bewegt werden können. Um eine effektive Beleuchtung sicherzustellen sind zwischen den vertikal angeordneten Förderbändern geeignete Leuchtstoffröhren vorgesehen.

Eine weitere technische Lösung zur automatisierten Pflanzenaufzucht wird in der US 2012/0279122 A1 beschrieben. Die beschriebene Anlage verfügt über ein Förderband, das schlangenförmig angeordnet ist und teilweise in vertikaler Richtung verläuft. Für die Umlenkung des Förderbandes sind entsprechende Umlenkrollen vorgesehen. Ferner sind für den Transport der Pflanzen spezielle Behälter vorgesehen, in denen sich Trägermaterial zur Aufnahme von Samen oder Pflanzen befindet und die mithilfe spezieller Hakenelemente in das umlaufende Förderband eingehakt werden. Die beschriebenen Behälter zur Aufnahme der Pflanzen erstrecken sich hierbei über die gesamte Breite des Förderbandes und können jeweils eine Mehrzahl von Pflanzen nebeneinander aufnehmen.

Ferner beschreibt die WO 2010/008335 eine Anlage zur automatisierten Pflanzenaufzucht, bei der die Pflanzen bei konstant vertikaler Ausrichtung in Pflanzenaufzuchtbehältern angeordnet und auf schräg verlaufenden Streckenabschnitten von unten nach oben sowie von oben nach unten gefördert werden. Die Pflanzen werden mittels einer Beleuchtungseinrichtung während ihrer Bewegung beleuchtet, wobei die einzelnen Leuchtelemente derart angeordnet sind, dass die Pflanzen auf der gesamten Förderstrecke beleuchtet werden. Um eine möglichst optimale Beleuchtung zu erreichen, sind die Leuchtelemente auch innerhalb der V-förmigen Förderstrecke angeordnet.

Im Weiteren beschreibt die US 2009/165373 A1 eine Vorrichtung, bei der die Pflanzen auf hierfür vorgesehenen Tragschienen auf einer rotierenden Trommel angeordnet werden. Die Pflanzen sind derart ausgerichtet, dass sie mit ihrem Blattwerk in das Innere der Trommel weisen, sodass die Pflanzen während der Bewegung teilweise über Kopf hängend gefördert werden. Im unteren Bereich der Trommel werden die Pflanzen hydroponisch mit Nährmedium versorgt.

Aus der EP 2 489 256 A2 ist eine Vorrichtung zur automatisierten Pflanzenaufzucht mit einem über Umlenkstellen geführten Förderband bekannt. Der Hauptteil des Förderbandes ist hierbei in horizontal verlaufenden Transportstrecken parallel übereinander angeordnet, während im Bereich der Umlenkrollen zwischen zwei horizontal übereinander angeordneten Abschnitten des Förderbandes sowie auf einer Strecke, auf der die Pflanzen zwischen dem obersten und dem untersten horizontalen Förderbandabschnitt gefördert werden, abschnittsweise eine Bewegung in vertikaler Richtung stattfindet. Die Förderstrecke ist innerhalb eines Gewächshauses angeordnet und eine Beleuchtung der Pflanzen erfolgt durch von außen eingestrahltes Sonnenlicht, das mit Hilfe eines Reflektors weiträumig umgelenkt wird.

Die bekannten automatisierten Systeme zur Pflanzenzucht haben trotz des erhöhten Energiebedarfs eine Reihe von Vorteilen gegenüber der konventionellen Landwirtschaft auf Äckern. Neben einer vollständigen Wetterunabhängigkeit können die klimatischen Verhältnisse im Inneren des Gewächshauses über die gesamte Zeit optimal an die jeweiligen Pflanzen angepasst und so ein konstantes Pflanzenwachstum erreicht werden. Aufgrund spezieller Anlagen zur Wasserrückgewinnung wird darüber hinaus zur Aufzucht der Pflanzen deutlich weniger Wasser als bei der Bewirtschaftung von Äckern im Freien benötigt. Außerdem wird vergleichsweise wenig Dünger benötigt und durch die Pflanzenaufzucht in vollklimatisierten Räumen wird ein pestizidfreier Pflanzenanbau möglich.

Bei Einsatz vertikal angeordneter Förderstrecken wird ferner der Vorteil einer wesentlich besseren Ausnutzung der zur Verfügung stehenden Fläche erreicht. Dies ist insbesondere in Industrieländern, die über einen vergleichsweise geringen Anteil von für die Landwirtschaft geeigneten Flächen verfügen, wie etwa Japan, von großem Vorteil.

Problematisch an den bekannten Systemen zur automatisierten Pflanzenaufzucht in vollklimatisierten Räumen ist oftmals, dass die verwendeten Anlagen nur verhältnismäßig aufwendig an unterschiedliche Pflanzen angepasst werden können. Bei einem Wechsel der angebauten Pflanzen muss berücksichtigt werden, dass sich die Größe verschiedener Pflanzen in der Wachstumsphase in unterschiedlichem Maße und in unterschiedlichen Zeiträumen verändert. Eine Adaption der bekannten Systeme zur automatisierten Pflanzenaufzucht an die jeweils geänderten Bedingungen ist nur schwer möglich. Im Übrigen stellt es regelmäßig ein Problem dar, die Pflanzen mit den erforderlichen Nährstoffen sowie Wasser zu versorgen, ohne dass es zu Schädigungen am Blatt- oder Wurzelwerk kommt.

Ausgehend von den aus dem Stand der Technik bekannten Systemen zur automatisierten Pflanzenaufzucht und den zuvor erläuterten Problemen liegt der Erfindung die Aufgabe zu Grunde, ein Pflanzenaufzuchtsystem bereitzustellen, das eine einfache, der Pflanzenwachstumsphase angepasste Aufzucht von Nutz- und Zierpflanzen, die vorzugsweise in geschlossenen Räumen realisiert wird, ermöglicht. Die anzugebende technische Lösung soll insbesondere auf vergleichsweise einfache Weise eine nahezu vollständige Automatisierung der Pflanzenaufzucht von der Aufbringung eines Samens bis zur Ernte der vollständig ausgereiften Pflanze ermöglichen. Weiterhin soll sichergestellt werden, dass der Wasser- sowie Nährstoffbedarf auf ein Minimum begrenzt werden kann. Hierbei soll sich die erfindungsgemäß ausgeführte Vorrichtung durch einen einfachen konstruktiven Aufbau auszeichnen, der auf bevorzugte Weise mit den für den Bau automatisierter Gewächshaussysteme bekannten Systemkomponenten realisierbar ist.

Die vorstehende Aufgabe wird mit einer Vorrichtung zur automatisierten Pflanzenaufzucht gemäß Anspruch 1 gelöst. Ein Verfahren zur Pflanzenaufzucht, das die Erfindung nutzt, ist im Anspruch 12 angegeben. Vorteilhafte Ausführungsformen der Erfindung sind Gegenstand der abhängigen Ansprüche und werden in der folgenden Beschreibung unter teilweiser Bezugnahme auf die Figuren näher erläutert.

Die Erfindung betrifft eine Vorrichtung zur Förderung des Wachstums von Pflanzen, insbesondere zur automatisierten Pflanzenaufzucht, mit einem entlang einer Förderstrecke bewegbaren Förderband zum wenigstens abschnittsweise Transport von Pflanzen. Die transportierten Pflanzen werden während der Bewegung entlang der Förderstrecke zumindest zeitweise von einer Nährstoffversorgung mit Nährstoffen und Wasser versorgt und werden während ihrer Förderung entlang der Förderstrecke in wenigstens einem ersten Abschnitt zumindest annähernd horizontal und in wenigstens einem zweiten Abschnitt zumindest annähernd vertikal bewegt. Hierbei sind die Pflanzen zumindest zeitweise während des Transports entlang der Förderstrecke derart relativ zum Förderband fixiert, dass Wurzeln der Pflanzen zumindest teilweise in einen unterhalb einer Unterseite des Förderbandes angeordneten Bereich hineinragen, während Blätter und/oder Früchte der Pflanzen wenigstens teilweise in einen Bereich, der sich oberhalb einer der Unterseite gegenüberliegenden Oberseite des Förderbandes befindet, hineinragen. Die Erfindung zeichnet sich dadurch aus, dass die Beleuchtung sowohl an die zu züchtende Pflanzenart, und/oder an das Pflanzenwachstum anpassbar ist als auch bei Bedarf zu jeder Zeit erfolgen kann und dass die Vorrichtung durch einen Zusammenbau wenigstens zweier vorgruppierter Module hergestellt ist, wobei ein Modul durch zumindest einen annähernd vertikal von unten nach oben verlaufenden Teilabschnitt der Förderstrecke und einen zumindest annähernd vertikal von oben nach unten verlaufenden Teilabschnitt der Förderstrecke gebildet wird und in Abhängigkeit der zu züchtenden Pflanze, eine für die Realisierung einer Vegetationsphase der Pflanze erforderliche Anzahl von Modulen über Schnittstellenelemente mit einander verbunden sind. In diesem Zusammenhang sind wesentliche Merkmale der Erfindung, dass die Pflanzen während ihrer Wachstumsphase auf dem Förderband fixiert sind, kontinuierlich in vertikaler Ausrichtung bewegt und zumindest zeitweise in Richtung auf eine Lichtquelle transportiert werden und der Wurzelbereich kontinuierlich mit einer Nährlösung versorgt wird. Aufgrund der speziellen Anordnung der Förderstrecke mit zumindest annähernd vertikal in Aufwärts- sowie Abwärtsrichtung verlaufenden Streckenabschnitten sind die Pflanzen einer ständigen orbitropischen Neuausrichtung ausgesetzt, was das Pflanzenwachstum begünstigt.

In einer speziellen Ausführungsform der Erfindung verfügt das Förderband wenigstens bereichsweise über ein Trägermaterial, in dem die Pflanzen zumindest zeitweise während des Transports entlang der Förderstrecke fixiert sind. Vorzugsweise wird das Trägermaterial derart gewählt, dass die Samen oder Pflanzen guten Halt finden und das Material darüber hinaus Wasser und/oder Nährmedium weiterleiten und zumindest zeitweise speichern kann. Da die erfindungsgemäß ausgeführte Vorrichtung die Pflanzen zumindest teilweise in annähernd vertikaler Richtung transportiert, ist es möglich, dass gemäß einer besonderen Weiterbildung der Erfindung die Pflanzen während ihrer Wachstumsphase kontinuierlich einer Beleuchtungsquelle in vertikaler Richtung zugeführt werden und dabei gleichzeitig der auf der Unterseite des Förderbandes angeordnete Wurzelbereich vorzugsweise aeroponisch mit Nähstoffen und Feuchtigkeit versorgt wird. In diesem Zusammenhang ist es denkbar, dass zwischen zwei vertikal verlaufenden Abschnitten der Förderstrecke ein oberer Umlenkpunkt vorgesehen ist, sodass die Pflanzen mit dem Förderband in vertikaler Richtung nach oben und anschließend nach Umlaufen des Umlenkpunktes in vertikaler Richtung nach unten bewegt werden.

Generell ist es denkbar, dass zur Beleuchtung natürliches und/oder mittels einer Beleuchtungseinheit, die bspw. wenigstens eine Leuchtstoffröhre und/oder eine LED aufweist, künstlich erzeugtes Licht verwendet wird. Das Vorsehen einer Beleuchtungseinheit zur Erzeugung von Licht hat hierbei den Vorteil, dass erfindungsgemäß die Beleuchtung gezielt insbesondere angepasst an die zu züchtende Pflanzenart, und/oder das Pflanzenwachstum abgestimmt, und bei Bedarf zu jeder Zeit erfolgen kann.

Gemäß einer speziellen Weiterbildung ist es ferner vorgesehen, dass die Beleuchtungseinheit derart ausgeführt ist, dass eine Beleuchtung der Pflanzen in gezielt ausgewählten Abschnitten der Förderstrecke stattfindet. Auf vorteilhafte Weise findet die Beleuchtung statt, während die Pflanzen kontinuierlich auf einem vertikal angeordneten Abschnitt der Förderstrecke nach oben bewegt werden. Weiterhin ist es vorteilhaft, dass die Pflanze nach Umlaufen des Umlenkpunktes, insbesondere sobald sie sich in vertikaler Richtung nach unten bewegt werden, zumindest zeitweise nicht mehr beleuchtet werden.

In einer besonders vorteilhaften Ausführungsform werden die auf dem Förderband fixierten Pflanzen, insbesondere die Wurzeln unterhalb des Förderbandes, aeroponisch mit Nährmedium versorgt, sobald sie in vertikaler Richtung bewegt werden, während sie im Bereich eines unteren Umlenkpunktes, der sich zwischen zwei vertikal verlaufenden Teilabschnitten der Förderstrecke befindet, zumindest teilweise durch ein Tauchbad bewegt werden, sodass in diesem Bereich eine hydroponische Nährstoffversorgung der Pflanzen, insbesondere des Wurzelwerks erfolgt. Auf der schlangen- bzw. meanderförmig ausgebildeten Förderstrecke mit vertikal verlaufenden Streckenabschnitten, zwischen denen sich untere und obere Umlenkpunkte oder -bereiche befinden, findet auf diese Weise eine kontinuierliche Versorgung der Pflanzen mit Nährstoffen und Feuchtigkeit statt. Für die aeroponische Bewässerung des Wurzelwerks der Pflanzen wird bevorzugt eine Nährmedium-Vernebelungsanlage eingesetzt. Mithilfe eines wie vorgeschrieben ausgeführten automatisierten Systems zur Pflanzenaufzucht ist es auf bevorzugte Weise möglich, auf der Unterseite des Förderbandes eine stetige aeroponische Bewässerung der Wurzeln vorzusehen, während im Bereich der unteren Umlenkpunkte ein hydroponisches Bad des Pflanzenträgermaterials beim Durchlaufen der Talphase des Förderbandes realisiert wird.

Durch die Fixierung der Pflanzen auf dem Förderband wird hierbei eine permanente oder zumindest über lange Zeiträume andauernde aeroponische Bewässerung realisiert, ohne dass das Blattwerk der Pflanze unnötig befeuchtet wird. Auf diese Weise werden Erkrankungen der Blattmasse zuverlässig verhindert. Die insbesondere auf den vertikalen Förderstreckenabschnitten unterhalb des Förderbandes befindliche Atmosphäre wird in Bezug auf die Temperatur und die Luftfeuchtigkeit mittels einer Sensorik überwacht und die Werte auf geeignete Weise über eine zentrale Steuereinheit geregelt, sodass eine zu hohe Luftfeuchtigkeit in diesem Bereich zuverlässig vermieden werden kann.

Auf vorteilhafte Weise ist die Förderstrecke derart dimensioniert und/oder die Laufgeschwindigkeit des Förderbandes derart eingestellt, dass eine einmalige Auf- und Abbewegung des Förderbandes über eine Umlenkung bei gleichzeitiger unterseitiger Befeuchtung des Wurzelbereichs als ein Modul ausgeführt ist, wobei eine derartige Kultivierungsschleife bevorzugt in 24 Stunden durchlaufen wird.

Durch den erfindungsgemäß vorgesehenen modulartigen Aufbau ist es möglich, eine Gesamtanlage zur automatisierten Aufzucht von Pflanzen an die jeweiligen Bedürfnisse, also die zu kultivierenden Pflanzen und/oder die jeweilige Vegetationsphase anzupassen. Durch die Verlängerung des Förderbandes durch Aneinanderreihung von Modulen kann so auf einfache Weise eine komplette Vegetationsperiode einer Kulturpflanze dargestellt werden, wobei jedes Modul den Bedürfnissen des Wachstumsstadions der jeweiligen Pflanzen bezüglich Ausleuchtung und Flächenbedarf angepasst ist. Aus diesem Grund sind gemäß einer bevorzugten auf der Erfindung beruhenden Gestaltung die einzelnen Module bzw. Abschnitte der Förderstrecke mit dem Förderband derart ausgeführt, dass insbesondere die Länge der unteren Abschnitte, die zwischen zwei vertikal verlaufenden Streckenabschnitten angeordnet sind, verändert werden können. Sobald mehrere Module zu einer Gesamtanlage zusammengefügt werden, ist es sinnvoll, wenn die Abstände zwischen einem annähernd vertikal nach unten und einem annähernd vertikal nach oben verlaufenden Streckenabschnitt mit zunehmender Transportdauer der Pflanzen größer werden, sodass die Abstände dem Pflanzenwachstum angepasst sind. Durch eine gezielte Variation des Abstandes der vertikal verlaufenden Strecken ist es somit möglich den Abstand an die jeweilige Größe der auf dem Förderband fixierten Pflanzen anzupassen.

Weiterhin ist es alternativ oder in Ergänzung zu der zuvor beschriebenen Ausführungsform auf vorteilhafte Weise denkbar, die Anpassung einer Vorrichtung zur automatisierten Pflanzenaufzucht an den Größenbedarf der jeweiligen Pflanzen durch eine Veränderung des Abstandes der Punkte, an denen die einzelnen Pflanzen auf dem Förderband fixiert sind, zu erreichen. Vorzugsweise sind hierfür mechanische Elemente vorgesehen, die eine bedarfsgerechte Einstellung des Abstandes der einzelnen Fixierungspunkte gewährleisten. So ist es etwa denkbar, dass die einzelnen Fixierungspunkte mit zunehmender Transportdauer einer Pflanze und dem damit einhergehenden Pflanzenwachstum weiter auseinandergezogen werden, wobei Raststellungen in verschiedenen Stellungen denkbar sind. Durch diese Anpassung der Förderstrecke bzw. des Förderbandes an die sich verändernde Größe der Pflanzen wird einerseits dem steigenden Platzbedarf der Pflanze Rechnung getragen und andererseits der Einsatz von Material und Energie minimiert. Auf diese Weise wird die Anlage sowohl unter ökonomischen als auch unter ökologischen Gesichtspunkten besonders effektiv betrieben, da beispielsweise der Aufwand in der Jungpflanzenphase für Bewässerung- und Beleuchtung deutlich verringert wird.

Gemäß einer weiteren speziellen Gestaltung der erfindungsgemäß ausgeführten Vorrichtung ist eine Beleuchtungseinheit vorgesehen, die eine gezielte und kontrollierte Bestrahlung der Pflanzen mit geeigneten Wellenlängen ermöglicht. Auch in diesem Fall ist es wiederum denkbar, die Beleuchtung den jeweiligen Bedürfnissen der Pflanze bzw. den unterschiedlichen Wachstumsphasen anzupassen. Auf diese Weise wird die Beleuchtung der Pflanzen gezielt an das Pflanzenwachstum angepasst. Gemäß einer weiteren Ausbildung ist die Vorrichtung derart ausgeführt, dass sowohl beleuchtete, als auch unbeleuchtete Abschnitte der Förderstrecke vorgesehen sind.

Auf bevorzugte Weise ist es weiterhin vorgesehen, dass die erfindungsgemäße Vorrichtung zur automatisierten Pflanzenzucht über eine Bestückungsanlage verfügt, durch die eine automatisierte Bestückung des Förderbandes und/oder des auf dem Förderband vorgesehenen Trägermaterials mit wenigstens einem Samen und/oder mit einer Jungpflanze erfolgt. Ebenso ist es denkbar, dass in einem Bereich des Förderbandes ein Erntemodul vorgesehen ist, mit dem die auf das gewünschte Maß gewachsene Pflanze, insbesondere das Blattwerk und/oder die Frucht, entfernt werden kann. Weiterhin bevorzugt verfügt die erfindungsgemäß ausgeführte Vorrichtung über einen Abschnitt, der sich vorzugsweise im Anschluss an das Erntemodul befindet, in dem das Förderband gereinigt und/oder sterilisiert wird.

Vorzugsweise ist eine Vorrichtung gemäß der Erfindung derart ausgeführt, dass eigene Bestückungs- und eine Ernteeinheit vorgesehen sind, zwischen denen sich in Bewegungsrichtung des Förderbandes eine Reinigungs- und/oder eine Sterilisierungsanlage, insbesondere eine Dampfsterlisierungsanlage befindet, sodass das Förderband nach der Ernte der gewachsenen Pflanzen bzw. vor einer Neubestückung gereinigt und/oder sterilisiert wird.

In Bezug auf die Fixierung der Pflanzen im oder am Förderband, ist es grundsätzlich denkbar, dass die Samen und/oder Jungpflanzen direkt oder mittelbar über ein Trägermaterial im oder am Förderband fixiert werden. Gemäß einer alternativen Ausführungsforum verfügt das Förderband über geeignete Pflanzenbehälter, die mit Pflanzen bestückt werden können und die mit Hilfe von Befestigungselementen am umlaufenden Förderband befestigt werden. In diesem Zusammenhang ist es etwa denkbar, dass das Förderband wenigstens eine Förderkette aufweist, in die ein als Befestigungselement dienender Haken des Pflanzenbehälters eingehängt wird, sobald eine Pflanze entlang der Förderstrecke transportiert werden soll. Werden entsprechend mit dem Förderband verbindbare Pflanzenbehälter eingesetzt, so werden diese vorzugsweise zum Erntevorgang von dem Förderband bzw. der Förderkette gelöst, nach Abschluss der Ernte gereinigt und schließlich wieder der Bestückungsanlage zugeführt. Nach Bestückung mit einem Samen oder einer Jungpflanze werden entsprechende Pflanzenbehälter wiederum am Anfang des Förderbandes bzw. der Förderkurse in diese eingehängt.

Neben einer speziellen Vorrichtung zur automatisierten Pflanzenaufzucht betrifft die Erfindung des Weiteren ein Verfahren zur automatisierten Aufzucht von Nutz- oder Zierpflanzen.

Wesentlich an dem erfindungsgemäß ausgeführten Verfahren ist, dass die Pflanzen fest auf oder am Förderband fixiert transportiert werden und durch den wenigstens zeitweise stattfindenden, zumindest nahezu vertikalen Transport verbunden mit einer Umlenkung an oberen und unteren Umlenkpunkten einer ständigen orbitropischen Neuausrichtung ausgesetzt sind. Aufgrund der fixierten Pflanzenführung ist es ferner vergleichsweise einfach möglich, eine permanente aeroponisch Bewässerung sicherzustellen, ohne dass der Blattanteil der Bepflanzung unnötig befeuchtet wird. Aus diesem Grund können Erkrankungen der Blattmasse weitgehend vermieden werden.

Die Art der räumlichen Trennung von Blattwerk und Wurzelbereich ermöglicht außerdem eine besser kontrollierbare und regelbare Atmosphäre und es kann zu hohe Luftfeuchtigkeit zuverlässig vermieden werden.

Ein besonderer Vorteil der Erfindung besteht weiterhin in der Möglichkeit, die Förderstrecke bzw. das Förderband an die Größe der Pflanzen anzupassen. Dies erfolgt bevorzugt durch mechanische Aufspreizung des Förderbandes im Bereich der Fixierpunkte und/oder der Abstände zwischen einzelnen Kultivierungsmodulen, um dem zunehmenden Platzbedarf der wachsenden Pflanzen an Zucht gerecht zu werden. Durch ein auf die veränderten Abstände zwischen den Pflanzen hin optimiertes Beleuchtungs- und Bewässerungsregime lassen sich deutliche Ersparnisse in der Installation und dem Energieverbrauch realisieren. Durch die erfindungsgemäße Vorrichtung, die bevorzugt eine modulare Aneinanderreihung von in vertikaler Richtung schleifenartig ausgeführten Kultivierungsmodulen vorsieht, ist eine besonders flexible, der Bepflanzung und dem Wachstumsstadium der Pflanzen angepasste und darüber hinaus ökonomische Pflanzenaufzucht möglich. Weiterhin können durch Kombination mit einer automatisierten Bestückungs- und/oder Ernteeinheit am Anfang bzw. Ende der Förderstrecke auf vorteilhafte Weise erhebliche Kosteneinsparungen realisiert werden.

Im Folgenden wird die Erfindung ohne Beschränkung des allgemeinen Erfindungsgedankens anhand von Ausführungsbeispielen und unter Bezugnahme auf die Figuren näher erläutert. Dabei zeigen:
- Figur 1:: Schematische Darstellung einer erfindungsgemäß ausgeführten Vorrichtung zur automatisierten Pflanzenaufzucht sowie
- Figur 2:: Draufsicht auf ein für eine Vorrichtung zur automatisierten Pflanzenaufzucht geeignetes Förderband.

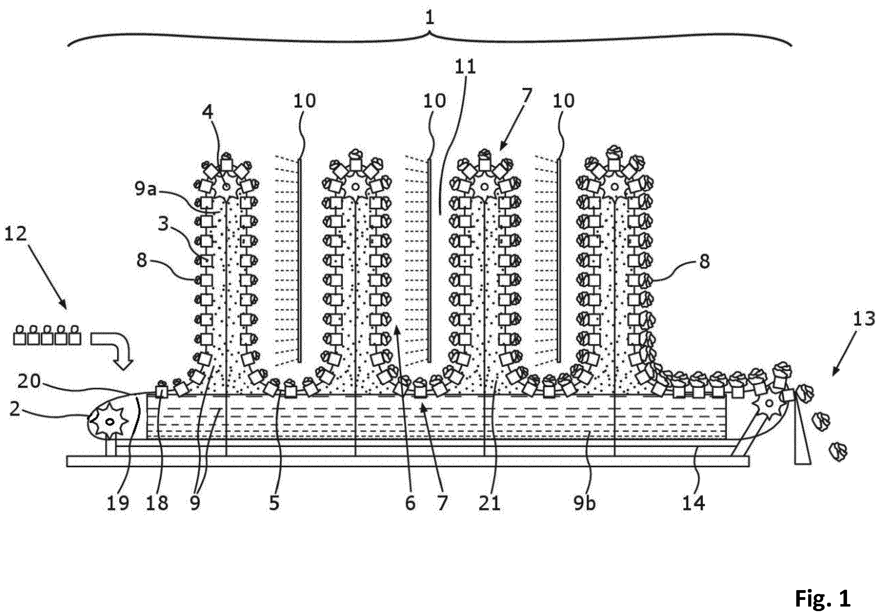

Figur 1 zeigt schematisch eine erfindungsgemäß ausgeführte Vorrichtung zur automatisierten Pflanzenaufzucht. Wesentlich an dieser Vorrichtung ist, dass die Pflanzen 8 während ihres Transports entlang der Förderstrecke 1 auf dem Förderband 2 fixiert sind, wobei sich die Wurzeln der Pflanzen 8 zumindest zum größten Teil auf einer anderen Seite des Förderbandes 2 als das Blattwerk befinden. Die Dimensionierung der Förderstrecke 1 sowie die Bewegungsgeschwindigkeit des Förderbandes 2 sind derart gewählt, dass der Zeitraum, den die Pflanzen 8 von der Aufbringung eines Samens oder einer Jungpflanze auf das Förderband 2 bis zur Entfernung vom Förderband 2 entlang der Förderstrecke 1 bewegt werden, einer Vegetationsphase der entsprechenden Pflanze 8 entspricht.

In Bezug auf die Anordnung der Förderstrecke 1 ist von besonderer Bedeutung, dass die auf dem Förderband 2 fixierten Pflanzen 8 abschnittsweise sowohl in Aufwärts- als auch in Abwärtsrichtung jeweils vertikal bewegt werden, während diese insbesondere im Bereich der oberen und unteren Umlenkpunkte 4, 5 zwischen den einzelnen vertikalen Streckenabschnitten 6 zumindest zeitweise in horizontaler Richtung bewegt werden.

Am Anfang der Förderstrecke 1 ist eine Bestückungseinheit 12 vorgesehen, durch die Aufnahmeelemente 3 des Förderbandes 2 jeweils mit einer jungen Pflanze 8 bestückt werden. Die Aufnahmeelemente 3 gemäß der beschriebenen Ausführungsform verfügen jeweils über ein Trägermaterial 18, in dem die Pflanze 8, insbesondere deren Wurzelwerk fixiert ist. Wesentlich ist, dass sich die Wurzeln der Pflanzen 8 in einem Bereich 19 unterhalb des Förderbandes 2 befinden, während sich das Blattwerk in einen Bereich 20 oberhalb des Förderbandes 2 erstreckt. Die Bereiche 19, 20, in denen sich das Wurzelwerk einerseits sowie das Blattwerk andererseits befinden, sind auf diese Weise räumlich voneinander getrennt. Darüber hinaus befindet sich das Wurzelwerk, während die Pflanzen 8 auf den vertikalen Abschnitten 6 der Förderstrecke 1 bewegt werden, in einem belüfteten Raum, in dem eine aeroponische Befeuchtung und Nährstoffversorgung 9a der Pflanzen 8 erfolgt.

Aufgrund der speziellen Gestaltung der Förderstrecke 1 werden die Pflanzen 8 mit dem Förderband 2 jeweils abwechselnd in vertikaler Richtung bis zu einem oberen Umlenkpunkt 4 und anschließend wiederum nach unten in Richtung auf einen unteren Umlenkpunkt 5 bewegt. Sobald die Pflanzen 8 das untere Ende der Vertikalstrecke 6 erreichen, werden diese zumindest über einen kurzen Streckenabschnitt 7 in horizontaler Richtung bewegt. Während dieser Bewegung im Bereich des unteren Umlenkpunktes 5 wird das Trägermaterial mit den darin angeordneten Wurzeln der Pflanze 8 in ein Tauchbad 9b eingetaucht, sodass eine hydroponische Befeuchtung und Nährstoffversorgung der Pflanzen 8 bewirkt wird. Im Anschluss an diese zumindest kurzzeitige Horizontalbewegung werden die Pflanzen 8 wiederum über die nächsten beiden vertikalen Streckenabschnitte 6 der Förderstrecke 1 mit dem dazwischen angeordneten oberen Umlenkpunkt 4 bewegt. Während die Pflanzen 8 entlang dieser vertikal angeordneten Streckenabschnitte 6 bewegt werden, erfolgt wiederum eine aeroponische Befeuchtung 9a der Pflanzenwurzeln auf der Unterseite des Förderbandes 2.

Ein Abschnitt der Förderstrecke 1, der aus zwei vertikalen Abschnitten 6, in denen die Pflanzen 8 von unten nach oben sowie anschließend von oben nach unten bewegt werden, und einem zwischen den Vertikalstrecken angeordneten Umlenkpunkt 5 besteht, wird als ein Modul oder auch Kultivierungsmodul bezeichnet. Hierbei ist ein Modul so ausgeführt und die Geschwindigkeit des Förderbandes 2 derart eingestellt, dass die Pflanzen 8 ein solches Modul innerhalb von 24 Stunden durchlaufen. Eine Gesamtanlage wiederum wird aus der benötigten Anzahl von Modulen zusammengesetzt, sodass eine gesamte Wachstumsphase der jeweiligen Pflanze 8 realisiert werden kann.

Im Weiteren verfügt die Vorrichtung zur automatisierten Pflanzenzucht über eine Beleuchtungseinheit 10, die derart ausgeführt ist, dass die Pflanzen 8 während ihrer Bewegung entlang der Förderstrecke 1 teilweise mit künstlich erzeugtem Licht beleuchtet und teilweise nicht beleuchtet werden. In dem in Figur 1 dargestellten Ausführungsbeispiel findet die Beleuchtung der Pflanzen 8 stets während ihrer Abwärtsbewegung auf einem vertikalen Streckenabschnitt 6 zwischen dem oberen 4 und dem unteren 5 Umlenkpunkt statt. Dagegen ist während der Bewegung der Pflanzen 8 entlang eines von unten nach oben verlaufenden Streckenabschnitts eine Beschattungsphase 11 vorgesehen. Hier ist die Beleuchtungseinheit 10 derart abgedeckt, dass die Pflanzen 8 nicht beleuchtet werden. Grundsätzlich ist es denkbar, die Art, Intensität und Dauer der Beleuchtung an die jeweilige Pflanzenart anzupassen. In jedem Fall erfolgt die Beleuchtung kontrolliert bzw. wird mit Hilfe von Sensoren sowie einer Steuereinheit auf geeignete Weise geregelt. In dem in Figur 1 gezeigten Ausführungsbeispiel sind als Beleuchtungseinheit 10 LED-Panel vorgesehen, die jeweils gegenüber dem in Abwärtsrichtung verlaufenden vertikalen Streckenabschnitt 6 angeordnet sind.

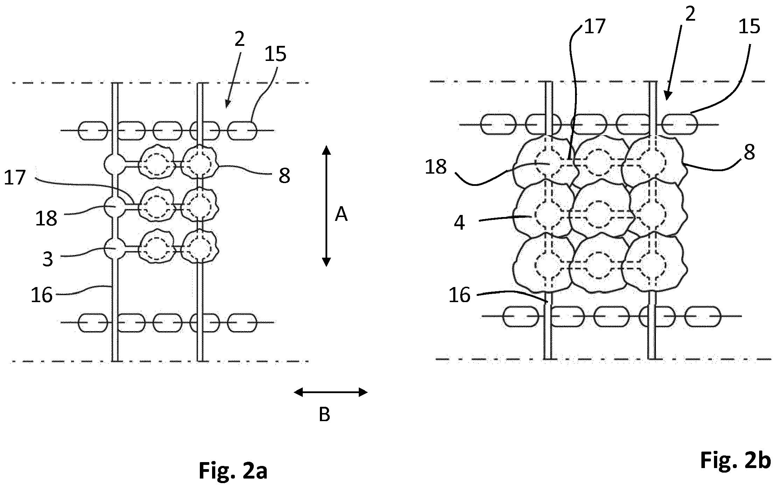

Im Übrigen verfügt die in Figur 1 dargestellte Vorrichtung zur automatisierten Pflanzenaufzucht über eine Verstelleinheit 21, sodass der Abstand zwischen den einzelnen aus zwei vertikalen Streckenabschnitten 6 und einem dazwischen angeordneten oberen Umlenkpunkt 4 bestehenden Modulen an das Größenwachstum der einzelnen Pflanzen 8 angepasst werden kann. Wie Figur 1 deutlich zu entnehmen ist, nimmt die Größe der Pflanzen 8 während ihres Transports entlang der Förderstrecke 1 zu. In dem Maß, in dem die Pflanzen 8 wachsen, wird einerseits der Abstand zwischen den einzelnen Modulen vergrößert und andererseits die Beleuchtung an den geänderten Lichtbedarf aufgrund des größer gewordenen Grünanteils der Pflanzen 8 angepasst. In Ergänzung zu diesen Maßnahmen ist auch das Förderband 2 derart gestaltet, dass in Abhängigkeit des Pflanzenwachstums der Abstand zwischen den einzelnen Aufnahmeelementen 3, in denen die Pflanzen jeweils fixiert sind, veränderbar ist. Eine spezielle Ausführungsform eines an das Größenwachstum der Pflanzen anpassbares Förderband 2 wird im Zusammenhang mit Figur 2 erläutert.

Am Ende der Förderstrecke 1 ist eine automatisierte Ernteeinheit 13 vorgesehen, die die nunmehr zu normaler Größe herangewachsen Pflanzen 8 vom umlaufenden Förderband 2 entfernt. Im unmittelbaren Anschluss an die Ernteeinheit 13 wird das Förderband 2 wiederum umgelenkt und läuft schließlich zurück zur Bestückungseinheit 12. Um die erforderliche Reinigung sowie Sterilisation des Förderbandes 2 sicherzustellen, wird das Förderband 2 auf der Strecke zwischen der Ernteeinheit 13 und der Bestückungseinheit 12 zunächst gereinigt und schließlich mithilfe einer Dampfsterilisationsanlage 14 sterilisiert. Das Förderband 2 gelangt somit vollkommen gereinigt und sterilisiert wieder zur Bestückungseinheit 12, durch die die einzelnen Aufnahmeelemente 3 des Förderbandes 2 erneut mit Trägermaterial 18, zumindest sofern dies nicht mehrfach verwendbar ist, sowie mit Samen oder Jungpflanzen 8 bestückt werden.

Wie in Figur 1 dargestellt, ist es vorteilhaft, wenn die einzelnen Aufnahmeelemente 3 zunächst in der Bestückungseinheit 12 oder einem vorgelagerten Prozessschritt mit Trägermaterial 18, sofern dieses nicht wiederverwendbar ist, und mit einem Samen oder einer Jungpflanze 8 bestückt werden, so dass die bereits bestückten Aufnahmeelemente 3 auf das Förderband 2 aufgebracht bzw. an diesem befestigt werden können.

Generell ist es allerdings auch denkbar, dass die Aufnahmeelemente 3 in das Förderband 2 integriert oder zumindest fest mit diesem verbunden sind, so dass die Bestückungseinheit 12 lediglich einen Samen oder eine Jungpflanze 8 und bei Bedarf neues Trägermaterial 18 in die Aufnahmeelemente 3 einbringt.

In beiden Fällen ist es möglich, dass die Aufnahmeelemente 3 bereits über Trägermaterial 18 verfügen, in das Samen oder Jungpflanzen 8 durch die Bestückungseinheit 12 eingebracht werden oder dass die einzelnen Aufnahmen 3 des Förderbandes 2 mit einem Samen oder einer Jungpflanze 8, deren Wurzeln sich bereits im Trägermaterial 18 befinden, bestückt werden.

Figur 2 zeigt eine Draufsicht auf einen Ausschnitt eines Förderbandes 2, das an das Wachstum der Pflanzen 8 während ihrer Förderung entlang der Förderstrecke 1 angepasst werden kann. Eine entsprechende Verstellung des Abstandes zwischen den einzelnen Aufnahmeelementen 3 ist sinnvoll, da sich mit zunehmendem Wachstum der Pflanzen 8 insbesondere der Blattanteil, beispielsweise bei Salatköpfen, erhöht und somit auch der Flächenbedarf der einzelnen Pflanzen 8 wächst. Aus diesem Grund werden die einzelnen Aufnahmeelemente 3 des Förderbandes 2 auf geeignete Weise mittels mechanischer Elemente auseinandergezogen, sodass die einzelne Pflanze 8 mehr Platz bzw. Raum für ihr Wachstum hat und eine ausreichende Beleuchtung der Pflanze sichergestellt wird.

Die zuvor beschriebene Anpassung wird im Wesentlichen dadurch erreicht, dass der Abstand zwischen den Aufnahmeelementen 3, in denen jeweils eine Pflanze 8 bzw. deren Wurzel im Trägermaterial 18 fixiert ist, in Abhängigkeit der Verweildauer der Pflanzen 8 auf dem Förderband 2 variiert wird. Unter Berücksichtigung des Umfangs und der Geschwindigkeit des Pflanzenwachstums werden die Abstände zwischen den einzelnen Aufnahmen während des Transports der Pflanzen 8 vergrößert. Hierzu wird in Figur 2 jeweils ein Ausschnitt eines Förderbandes 2 mit daran fixierten Pflanzen 8 in zwei unterschiedlichen Wachstumsstadien der Pflanzen 8 gezeigt. Während sich die in Figur 2 a) gezeigten Pflanzen 8 noch am Anfang der Förderstrecke 1 befinden und vergleichsweise klein sind, befinden sie sich in dem in Figur 2 b) dargestellten Zustand bereits unmittelbar vor der Ernte und haben daher eine entsprechende Größe erreicht. Um dieses Größenwachstum zu berücksichtigen, sind die Abstände zwischen den einzelnen Aufnahmeelemente 3 in Figur 2 b) deutlich größer als die entsprechenden Abstände in Figur 2 a).

Bei der in Figur 2 gezeigten Ausführungsform verfügt das Förderband 2 über Förderketten 15, an denen die einzelnen Pflanzenaufnahmen 3 über geeignete, elastische 16 befestigt sind. Die Transportbänder 16 sind derart ausgeführt, dass sowohl der Abstand "A" zwischen den parallel angeordneten Transportbändern 16 als auch der Abstand "B" zwischen den jeweils an einem Transportband 16 befestigten Aufnahmeelementen 3 verändert werden können. Während eine Veränderung des Abstandes "A" durch eine Bewegung der Transportbänder 16 nach außen realisiert wird, werden die Abstände "B" zwischen den einzelnen Aufnahmen 3 durch eine elastische Dehnung der Transportbänder 16 in Längsrichtung verändert. Gleichermaßen wird eine Vergrößerung der Abstände zu den nicht direkt mit den Transportbändern 16 verbundenen Aufnahmeelementen 3 erreicht, indem zwischen den Aufnahmeelementen 3 elastische Verbindungselemente 17 vorgesehen sind, die bei einer Verstellung der Transportbänder 16 entsprechend gedehnt werden.

Die Befestigung der Aufnahmen 3 an den Transportbändern 16 kann durch Einhängen zumindest eines Teils der Aufnahmen 3 in die Transportbänder 16 erfolgen. Ebenso ist es denkbar, dass wenigstens ein Teil der Aufnahmen 3 fest mit jeweils einem Transportband 16 verbunden ist.

Wie Figur 2 zu entnehmen ist, müssen allerdings nicht alle Aufnahmen 3 direkt mit einem Transportband 16 verbunden sein, sondern können auch mittelbar mit Hilfe elastischer Verbindungen 17 über andere Aufnahmen 3 mit wenigstens einem Transportband 16 verbunden sein. Mit zunehmender Transportzeit der Pflanzen 8 werden die Transportbänder 16 einerseits auseinanderbewegt und andererseits in Längsrichtung gedehnt, sodass sich die Abstände der Aufnahmen 3 mit den darin befindlichen Pflanzen 8 vergrößern. In diesem Zusammenhang ist es ebenfalls denkbar, dass lediglich zwischen den einzelnen Aufnahmeelementen 3 elastisch dehnbare Elemente 17 vorgesehen sind und lediglich die äußeren Aufnahmen 3, nämlich in Figur 2 die jeweils an den Eckpunkten befindlichen Aufnahmen 3 nach außen gezogen werden. Genauso könnten die Aufnahmen 3 an unterschiedlichen Stellen eines elastischen Netzes angeordnet sein oder ein entsprechendes elastisches Netz könnte zumindest einen Teil des Förderbandes 2 bilden, wobei das Netz bedarfsgerecht, insbesondere in Abhängigkeit des Pflanzenwachstums, auseinandergezogen werden kann, um die Abstände zwischen den Aufnahmen 3 bedarfsgerecht zu verändern.

Weiterhin ist es denkbar, dass die Bewegung der einzelnen Aufnahmen 3 nicht aufgrund der Bewegung elastischer Verbindungelemente 17 erfolgt, sondern die Aufnahmen 3 einzeln aktiv verfahrbar sind.

### Bezugszeichenliste

- 1: Förderstrecke
- 2: Förderband
- 3: Aufnahme
- 4: oberer Umlenkpunkt
- 5: unterer Umlenkpunkt
- 6: vertikaler Streckenabschnitt
- 7: horizontaler Streckenabschnitt
- 8: Pflanze
- 9: Nährstoffversorgungseinheit
9a aeroponische Nährstoffversorgungseinheit
9b hydroponische Nährstoffversorgungseinheit
- 10: Beleuchtungseinheit
- 11: Beschattungsphase
- 12: Bestückungseinheit
- 13: Ernteeinheit
- 14: Reinigungs- und Sterilisationseinheit
- 15: Förderkette
- 16: Transportband
- 17: elastische Verbindungselemente
- 18: Trägermaterial
- 19: Bereich unterhalb des Förderbandes
- 20: Bereich oberhalb des Förderbandes
- 21: Verstelleinheit

## Patentansprüche

1. Vorrichtung zur Förderung des Wachstums von Pflanzen (8) mit einem entlang einer Förderstrecke (1) bewegbaren Förderband (2) zum wenigstens abschnittsweisen Transport von Pflanzen (8), die während einer Bewegung entlang der Förderstrecke (1) zumindest zeitweise von einer Nährstoffversorgung (9) mit Nährstoffen versorgt und von einer Beleuchtungseinheit (10) bestrahlt werden, wobei die Förderstrecke (1) in wenigstens einem ersten Abschnitt (7) zumindest annähernd horizontal und in wenigstens einem zweiten Abschnitt (6) zumindest annähernd vertikal angeordnet ist,
wobei die Pflanzen (8) zumindest zeitweise während des Transports entlang der Förderstrecke (1) derart relativ zum Förderband (2) fixiert sind, dass Wurzeln der Pflanzen (8) zumindest teilweise in einen unterhalb einer Unterseite des Förderbandes (2) angeordneten Bereich (19) hineinragen, während Blätter und/oder Früchte der Pflanzen (8) wenigstens teilweise in einen oberhalb einer Oberseite des Förderbandes, die der Unterseite gegenüberliegt, angeordneten Bereich (20) hineinragen,
wobei die Beleuchtungseinheit (10) derart ausgeführt ist, dass die Beleuchtung sowohl an die zu züchtende Pflanzenart und/oder an das Pflanzenwachstum anpassbar ist als auch bei Bedarf zu jeder Zeit erfolgen kann, **dadurch gekennzeichnet, dass** die Vorrichtung durch einen Zusammenbau wenigstens zweier vorgruppierter Module hergestellt ist, wobei ein Modul durch zumindest einen annähernd vertikal von unten nach oben verlaufenden Teilabschnitt der Förderstrecke (1) und einen zumindest annähernd vertikal von oben nach unten verlaufenden Teilabschnitt der Förderstrecke (1) gebildet wird und in Abhängigkeit der zu züchtenden Pflanze eine für die Realisierung einer Vegetationsphase der Pflanze erforderliche Anzahl von Modulen über Schnittstellenelemente mit einander verbunden sind.

2. Vorrichtung nach Anspruch 1,
**dadurch gekennzeichnet, dass** das Förderband (2) wenigstens bereichsweise ein Trägermaterial (18) aufweist, in dem die Pflanzen (8) zumindest zeitweise während des Transports entlang der Förderstrecke (1) fixiert sind.

3. Vorrichtung nach Anspruch 1 oder 2,
**dadurch gekennzeichnet, dass** die Förderstrecke (1) zwischen zwei zumindest annähernd vertikal angeordneten Teilabschnitten (6) einen unteren Umlenkpunkt (5) aufweist

4. Vorrichtung nach einem der Ansprüche 1 bis 3,
**dadurch gekennzeichnet, dass** die Förderstrecke (1) zwischen zwei zumindest annähernd vertikal angeordneten Teilabschnitten (6) einen oberen Umlenkpunkt (4) aufweist.

5. Vorrichtung nach einem der Ansprüche 1 bis 4,
**dadurch gekennzeichnet, dass** eine zumindest teilweise automatisierte Bestückungseinheit (12) vorgesehen ist, die das Förderband (2) mit Pflanzensamen und/oder Jungpflanzen (8) bestückt

6. Vorrichtung nach einem der Ansprüche 1 bis 5,
**dadurch gekennzeichnet, dass** die Nährstoffversorgung (9) in dem unterhalb der Unterseite des Förderbandes liegenden Bereich (19) eine Versorgungseinheit (9) zur aeroponischen Versorgung der Pflanzen (8) mit Nährstoffen aufweist, die ein Nährmedium vernebelt und/oder in Richtung auf die Unterseite des Förderbandes ausbringt.

7. Vorrichtung nach einem der Ansprüche 1 bis 6,
**dadurch gekennzeichnet, dass** die Nährstoffversorgung (9) über wenigstens ein Tauchbad (9b) mit Nährlösung verfügt, durch das zumindest Wurzeln der Pflanzen (8) wenigstens abschnittsweise entlang der Förderstrecke (1) geführt werden.

8. Vorrichtung nach einem der Ansprüche 1 bis 7,
**dadurch gekennzeichnet, dass** wenigstens eine Verstelleinheit (21) vorgesehen ist, um einen Abstand zwischen einem zumindest annähernd vertikal von oben nach unten verlaufenden Teilabschnitt der Förderstrecke (1) und einem zumindest annähernd vertikal von unten nach oben verlaufenden Teilabschnitt der Förderstrecke (1) zu verändern.

9. Vorrichtung nach Anspruch 1,
**dadurch gekennzeichnet, dass** wenigstens eine Beleuchtungseinheit (10) in das Modul integriert ist und/oder dass zwei Module durch einen zumindest annähernd horizontal verlaufenden Teilabschnitt der Förderstrecke (1) verbunden sind, dessen Länge in Abhängigkeit der zu züchtenden Pflanze gewählt wird.

10. Vorrichtung nach einem der Ansprüche 1 bis 9,
**dadurch gekennzeichnet, dass** eine zumindest teilweise automatisierte Ernteeinheit (13) vorgesehen ist, die Pflanzen (8) zumindest teilweise vom Förderband (2) entfernt

11. Vorrichtung nach einem der Ansprüche 1 bis 10,
**dadurch gekennzeichnet, dass** in einem Bereich der Förderstrecke (1), der zwischen einem Bereich, in dem die Pflanzen zumindest teilweise vom Förderband (2) entfernt werden, und einem Bereich, in dem Pflanzensamen und/oder Jungpflanzen (8) auf dem Förderband (2) fixiert werden, liegt eine Reinigungs- und/oder Sterilisationseinheit (14) zur Reinigung und /oder Sterilisation des Förderbandes (2) angeordnet ist.

12. Verfahren zur Förderung des Wachstums von Pflanzen (8), bei dem die Pflanzen (8) mit einem Förderband (2) entlang einer Förderstrecke (1) bewegt, während der Bewegung entlang der Förderstrecke (1) zumindest zeitweise von einer Nährstoffversorgung (9 mit Nährstoffen versorgt und von einer Beleuchtungseinheit (10) bestrahlt werden, wobei die Pflanzen (8) in wenigstens einem ersten Abschnitt (7) der Förderstrecke (1) zumindest annähernd in horizontaler Richtung und in wenigstens einem zweiten Abschnitt (6) der Förderstrecke (1) zumindest annähernd in vertikaler Richtung bewegt werden,
wobei die Pflanzen (8) zumindest zeitweise während des Transports entlang der Förderstrecke (1) derart relativ zum Förderband (2) fixiert werden, dass Wurzeln der Pflanzen (8) zumindest teilweise in einen unterhalb einer Unterseite des Förderbandes angeordneten Bereich (19) hineinragen, während Blätter und/oder Früchte der Pflanzen wenigstens teilweise in einen oberhalb einer Oberseite des Förderbandes, die der Unterseite gegenüberliegt, angeordneten Bereich (20) hineinragen,
wobei die entlang der Förderstrecke (1) bewegten Pflanzen (8) derart beleuchtet werden, dass die Beleuchtung sowohl an die zu züchtende Pflanzenart und/oder an das Pflanzenwachstum angepasst wird und/oder bei Bedarf zu jeder Zeit erfolgt, **dadurch gekennzeichnet, dass** in Abhängigkeit der zu züchtenden Pflanze eine für die Realisierung einer Vegetationsphase der Pflanze erforderliche Anzahl von wenigstens zwei Modulen, die jeweils durch einen zumindest annähernd vertikal von unten nach oben verlaufenden Teilabschnitt der Förderstrecke (1) und durch einen zumindest annähernd vertikal von oben nach unten verlaufenden Teilabschnitt der Förderstrecke (1) gebildet werden, aneinander gereiht wird.

13. Verfahren nach Anspruch 12,
**dadurch gekennzeichnet, dass** die Pflanzen (8) während sie zumindest annähern vertikal bewegt werden wenigstens zeitweise aeroponisch mit Wasser und/oder Nährstoffen versorgt werden.

14. Verfahren nach Anspruch 12 oder 13,
**dadurch gekennzeichnet, dass** die Pflanzen (8) während sie zumindest annähern horizontal bewegt werden wenigstens zeitweise hydroponisch mit Wasser und/oder Nährstoffen versorgt werden.

## Claims

1. A device for promoting the growth of plants (8) using a conveyor belt (2) that can be moved along a conveyor section (1) for at least transporting plants (8) in sections, which, when being moved along the conveyor section (1) are at least from time to time supplied with nutrients by way of a nutrient supply (9), and irradiated by an illumination unit (10), wherein at least a first section (7) of the conveyor section (1) is at least arranged approximately horizontally, and at least a second section (6) is at least arranged approximately vertically,
wherein, when being transported along the conveyor section (1) relative to the conveyor belt (2), the plants (8) are at least temporarily fixed in such a way that roots of the plants (8) at least sometimes extend inwards into an area (19) arranged underneath an underside of the conveyor belt (2), while leaves and/or fruits of the plants (8) at least sometimes extend inwards into an area (20) arranged above an upper side of the conveyor belt, which is located opposite the underside, wherein
the illumination unit (10) is designed in such a way that the lighting can be adjusted to both the species of plant to be cultivated and/or the growth of the plant, and as required, at any time, **characterised in that** the device is manufactured by assembling at least two pre-grouped modules, wherein one module is formed by an at least one approximately vertical sub-section of the conveyor section (1) running from the bottom to the top and one by an at least approximately vertical sub-section of the conveyor section (1) running from the top to the bottom, and, depending upon the plants to be cultivated, a number of modules required for implementing a vegetation phase of the plant are connected with one another via interface elements.

2. The device in accordance with Claim 1,
**characterised in that** the conveyor belt (2), at least in some areas, contains a substrate (18), in which the plants (8) are at least temporarily fixed when being transported along the conveyor section (1).

3. The device in accordance with Claim 1 or 2,
**characterised in that** the conveyor section (1) contains a lower deflection point (5) between two sub-sections (6) arranged at least approximately vertically.

4. The device in accordance with one of Claims 1 to 3,
**characterised in that** the conveyor section (1) contains an upper deflection point (4) between two sub-sections (6) arranged at least approximately vertically.

5. The device in accordance with one of Claims 1 to 4,
**characterised in that** an at least partially automated pick-and-place unit (12) is provided for, which populates the conveyor belt (2) with plant seeds and/or seedlings (8).

6. The device in accordance with one of Claims 1 to 5,
**characterised in that** the nutrient supply (9) in the area (19) located underneath the underside of the conveyor belt contains a supply unit (9) for supplying the plants (8) with nutrients aeroponically, which nebulises a culture medium and/or deploys it in the direction of the underside of the conveyor belt.

7. The device in accordance with one of Claims 1 to 6,
**characterised in that** the nutrient supply (9) contains at least one dipping bath (9b) with nutrient solution, through which at least roots of the plants (8) are guided, at least in sections, along the conveyor section (1).

8. The device in accordance with one of Claims 1 to 7,
**characterised in that** at least one adjustment unit (21) is provided for, in order to alter a distance between a sub-section of the conveyor section (1) running at least approximately vertically from the top to the bottom and a sub-section of the conveyor section (1) running at least approximately vertically from the bottom to the top.

9. The device in accordance with Claim 1,
**characterised in that** at least one illumination unit (10) is integrated into the module and/or that two modules are connected by a sub-section of the conveyor section (1) running at least approximately horizontally, the length of which is chosen depending upon the plant to be cultivated.

10. The device in accordance with one of Claims 1 to 9,
**characterised in that** an at least partially automated harvesting unit (13) is provided for, which at least sometimes removes plants (8) from the conveyor belt (2).

11. The device in accordance with one of Claims 1 to 10,
**characterised in that**, in an area of the conveyor section (1), which is arranged between an area in which the plants are, at least sometimes, removed from the conveyor belt (2) and an area in which plant seeds and/or seedlings (8) are fixed to the conveyor belt (2), a cleaning and/or sterilisation unit (14) for cleaning and/or sterilising the conveyor belt (2) is arranged.

12. A method of fostering the growth of plants (8), in the case of which the plants (8) are moved along a conveyor section (1) by a conveyor belt (2), wherein, while being moved along the conveyor section (1) they are at least from time to time supplied with nutrients by way of a nutrient supply (9 and are irradiated by an illumination unit (10), in regard to which the plants (8) are moved in at least a first section (7) of the conveyor section (1) at least in an approximately horizontal direction, and in at least a second section (6) of the conveyor section (1) at least in an approximately vertical direction,
wherein the plants (8) are at least from time to time fixed, when being transported along the conveyor section (1) relative to the conveyor belt (2), in such a way that roots of the plants (8) at least sometimes extend inwards into an area (19) arranged underneath an underside of the conveyor belt, while leaves and/or fruits of the plants at least sometimes extend inwards into an area (20) arranged above an upper side of the conveyor belt, which is located opposite the underside,
wherein the plants (8) that are moved along the conveyor section (1) are illuminated in such a way that the lighting is adapted to both the type of plant to be cultivated and/or the plant growth, and/or is implemented at any time, as required, **characterized in that**, depending upon the plant to be cultivated, a number of at least two modules required for implementing a vegetation phase of the plant, which are, respectively, formed by a sub-section of the conveyor section (1) running a least approximately vertically from the bottom to the top, and by a sub-section of the conveyor section (1) running at least approximately vertically from the top to the bottom, is arranged in sequence.

13. The method in accordance with Claim 12,
**characterised in that** the plants (8) are at least from time to time supplied aeroponically with water and/or nutrients while they are being moved at least approximately vertically.

14. The method in accordance with Claim 12 or 13,
**characterised in that** the plants (8) are at least from time to time supplied hydroponically with water and/or nutrients while they are being moved at least approximately horizontally.

## Revendications

1. Dispositif visant à favoriser la croissance de plantes (8) avec une bande transporteuse (2) déplaçable le long d'une ligne de convoyage (1) pour le transport au moins par section de plantes (8) qui, lors d'un déplacement le long de la ligne de convoyage (1), sont au moins temporairement alimentés en nutriments (9) par un apport en nutriments et sont irradiés par une unité d'éclairage (10), la ligne de convoyage (1) étant disposée au moins approximativement horizontalement dans au moins une première section (7) et au moins approximativement verticalement dans au moins une deuxième section (6),
dans lequel les plantes (8) sont au moins temporairement fixées par rapport à la bande transporteuse (2) pendant le transport le long de la ligne de convoyage (1) de telle manière que les racines des plantes (8) font saillie au moins partiellement dans une zone (19) disposée sous une face inférieure de la bande transporteuse (2), tandis que les feuilles et/ou les fruits des plantes (8) font saillie au moins partiellement dans une zone (20) disposée au-dessus d'une face supérieure de la bande transporteuse qui est opposée à la partie inférieure côté, dans lequel
l'unité d'éclairage (10) est conçue de telle manière que l'éclairage est adaptable aux espèces végétales à cultiver et/ou à la croissance des plantes et peut également être réalisé à tout moment si nécessaire, **caractérisé en ce que** le dispositif est réalisé par l'assemblage d'au moins deux modules pré-groupés, un module étant formé par au moins une section de la ligne de convoyage (1) s'étendant sensiblement verticalement de bas en haut et une section de la ligne de convoyage (1) s'étendant au moins sensiblement verticalement de haut en bas et, en fonction de la plante à cultiver, un nombre de modules nécessaires à la réalisation d'une phase de végétation de la plante étant reliés les uns aux autres via des éléments d'interface.

2. Dispositif selon la revendication 1,
**caractérisé en ce que** la bande transporteuse (2) présente au moins un matériau porteur (18), dans lequel les plantes (8) sont fixées le long de la ligne de convoyage (1) au moins temporairement pendant le transport.

3. Dispositif selon la revendication 1 ou 2,
**caractérisé en ce que** la ligne de convoyage (1) présente un point de déviation inférieur (5) entre deux sous-sections (6) disposées au moins approximativement verticalement.

4. Dispositif selon l'une des revendications 1 à 3,
**caractérisé en ce que** la ligne de convoyage (1) présente un point de déviation supérieur (4) entre deux sous-sections (6) disposées au moins approximativement verticalement.

5. Dispositif selon l'une des revendications 1 à 4,
**caractérisé en ce qu'**il est prévu une unité de chargement au moins partiellement automatisée (12) qui équipe la bande transporteuse (2) de graines de plantes et/ou de jeunes plantes (8).

6. Dispositif selon l'une des revendications 1 à 5,
**caractérisé en ce que** l'apport en nutriments (9) présente une unité d'alimentation en nutriments (9) pour l'alimentation aéroponique des plantes (8) dans la zone (19) située sous la face inférieure de la bande transporteuse, qui nébulise un milieu nutritif et/ou épand vers le dessous de la bande transporteuse.

7. Dispositif selon l'une des revendications 1 à 6,
**caractérisé en ce que** l'apport en nutriments (9) dispose d'au moins un bain d'immersion (9b) avec solution nutritive, à travers lequel au moins les racines des plantes (8) sont guidées au moins par sections le long de la ligne de convoyage (1).

8. Dispositif selon l'une des revendications 1 à 7,
**caractérisé en ce qu'**il est prévu au moins une unité de réglage (21) afin de modifier une distance entre une section de la ligne de convoyage (1) s'étendant au moins approximativement verticalement de haut en bas et une section de la ligne de convoyage (1) s'étendant au moins approximativement verticalement de bas en haut.

9. Dispositif selon la revendication 1,
**caractérisé en ce qu'**au moins une unité d'éclairage (10) est intégrée dans le module et/ou **en ce que** deux modules sont reliés par au moins une section de la ligne de convoyage (1) s'étendant au moins approximativement horizontalement, dont la longueur est sélectionnée en fonction de la plante à cultiver.

10. Dispositif selon l'une des revendications 1 à 9,
**caractérisé en ce qu'**il est prévu une unité de récolte au moins partiellement automatisée (13) qui enlève au moins partiellement les plantes (8) de la bande transporteuse (2).

11. Dispositif selon l'une des revendications 1 à 10,
**caractérisé en ce que** dans une zone de la ligne de convoyage (1) entre une zone dans laquelle les plantes sont au moins partiellement retirées de la bande transporteuse (2) et une zone dans laquelle des graines de plantes et/ou de jeunes plantes (8) sur la bande transporteuse (2) sont fixes, une unité de nettoyage et/ou de stérilisation (14) est agencée pour nettoyer et/ou stériliser la bande transporteuse (2).

12. Procédé visant à favoriser la croissance de plantes (8), dans lequel les plantes (8) sont déplacées avec une bande transporteuse (2) le long d'une ligne de convoyage (1), tandis que le mouvement le long de la ligne de convoyage (1) est au moins temporairement assuré avec des nutriments par une alimentation en nutriments (9 et sont irradiés par une unité d'éclairage (10), les plantes (8) étant déplacées au moins approximativement dans la direction horizontale dans au moins une première section (7) de la ligne de convoyage (1) et étant déplacés au moins approximativement dans la direction verticale dans au moins une deuxième section (6) de la ligne de convoyage (1),
dans lequel les plantes (8) sont au moins temporairement fixées par rapport à la bande transporteuse (2) pendant le transport le long de la ligne de convoyage (1) de telle manière que les racines des plantes (8) font saillie au moins partiellement dans une zone (19) disposée sous une face inférieure de la bande transporteuse, tandis que les feuilles et/ou les fruits des plantes font saillie au moins partiellement dans une zone (20) disposée au-dessus d'une face supérieure de la bande transporteuse qui est opposée à la face inférieure,
dans lequel les plantes (8) se déplaçant le long de la ligne de convoyage (1) sont éclairées de manière à ce que l'éclairage soit adapté à la fois aux espèces végétales à cultiver et/ou à la croissance des plantes et/ou s'effectue à tout moment si nécessaire, **caractérisé en ce qu'**en fonction de la plante à cultiver, un nombre d'au moins deux modules nécessaires à la réalisation d'une phase de végétation de la plante s'enchaîne, chacun étant formé d'une section de la ligne de convoyage (1) s'étendant au moins approximativement verticalement de bas en haut et d'une section de la ligne de convoyage (1) s'étendant au moins approximativement verticalement de haut en bas.

13. Procédé selon la revendication 12,
**caractérisé en ce que** les plantes (8) sont alimentées au moins temporairement de manière aéroponique en eau et/ou en nutriments pendant qu'elles sont déplacées au moins approximativement verticalement.

14. Procédé selon la revendication 12 ou 13,
**caractérisé en ce que** les plantes (8) sont alimentées au moins temporairement de manière hydroponique en eau et/ou en nutriments pendant qu'elles sont déplacées au moins approximativement horizontalement.
